# EUROPEAN PATENT SPECIFICATION

(11) **EP 4 071 421 B1**
(45) Date of publication and mention of the grant of the patent: **20.12.2023**
(21) Application number: 22166458.4
(22) Date of filing: 04.04.2022
(51) Int. Cl.: F24F 13/14, F16K 17/36, F24F 13/15

(54) **BLAST DAMPER**
SPRENGDÄMPFER
AMORTISSEUR DE SOUFFLE

(30) Priority: 07.04.2021 FI 20215410
(43) Date of publication of application: 12.10.2022
(73) Proprietor: VG Innovations S.à r.l., 2146 Luxembourg (LU)
(72) Inventor: Niemi, Timo, 00880 Helsinki (FI); Lahtinen, Osmo, 00880 Helsinki (FI)
(74) Representative: Boco IP Oy Ab

(56) References cited:
- WO-A1-2009/044267
- WO-A1-2016/142577
- WO-A2-2004/053272
- US-A- 3 059 565
- US-A1- 2016 265 806

## Description

### Field of the invention

The invention relates to a blast damper as defined in the preamble of independent claim 1.

In petrochemical plants, oil-drilling rigs, process industry plants and other corresponding plants, it is necessary to safeguard against sudden and high pressure loads caused by explosions, sudden fires, or the like. Ventilation systems are safeguarded against such pressure loads by installing in them pressure valves or blast dampers that close automatically when a pressure load of the above-mentioned type is directed to them. Pressure valves of this type may also be installed at a desired location in a ventilation shaft or directly inside or outside a pressure load-resistant wall in connection with a ventilation shaft. Prior art pressure valves comprise plate-like closing blades arranged on turning axles. Normally, there are two or more axles in a pressure valve and they extend parallel at a distance from each other across a flow channel formed by the pressure valve, through which air or some other flowing medium flows through the pressure valve. One or more closing blades may be installed next to each other on one axle. In a normal operating mode, the closing blades are in an open position that allows air or some other flowing medium to flow through the closing blades and the pressure valve. Thus, in the open position, the closing blades are set in the flow direction of the air flowing through the pressure valve or at an angle relative to the flow direction.

Publication WO/2016/142577 presents a pressure valve comprising a body forming a flow channel through the pressure valve. The pressure valve comprises closing blades arranged to be turned between a closed position, in which the closing blades are essentially transverse to the flow channel of the pressure valve essentially preventing flow through the pressure valve , and an open position, in which the closing blades are at an angle to the flow channel of the pressure valve or essentially parallel to the flow channel allowing flow through the pressure valve. The pressure valve comprises prestressing means for prestressing the closing blades into the open position and for triggering them to turn into the closed position in response to a pressure increase in the flow channel of the pressure valve.

### Objective of the invention

The object of the invention is to provide a blast damper that has a narrow frame in the flow direction of the flow channel.

### Short description of the invention

The blast damper of the invention is characterized by the definitions of independent claim 1.

Preferred embodiments of the blast damper are defined in the dependent claims.

### List of figures

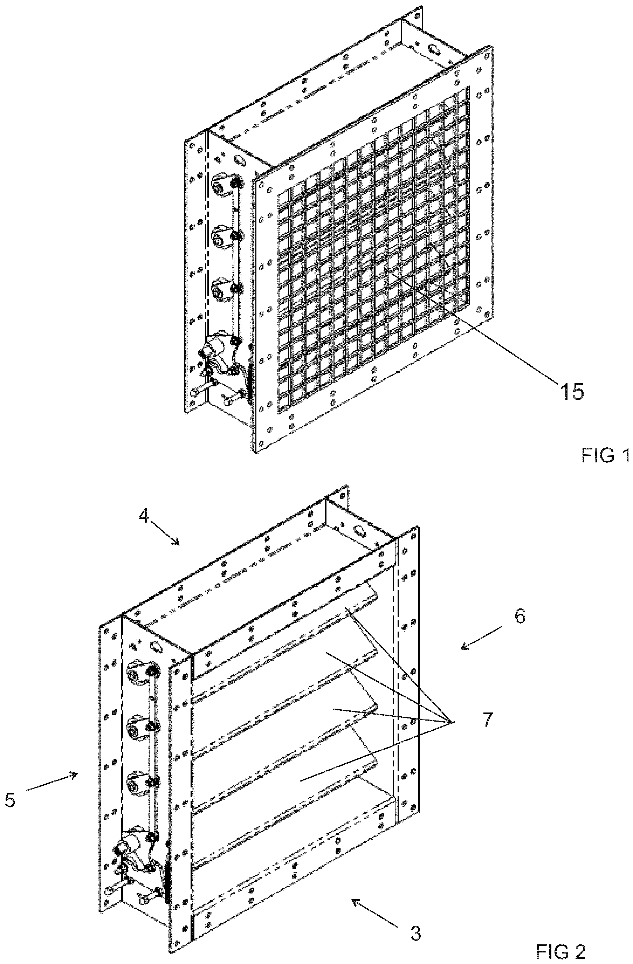

In the following the invention will described in more detail by referring to the figure, which
Figure 1 shows an embodiment of the blast damper
Figure 2 shows the blast damper shown in figure 1 with the protecting screen removed,

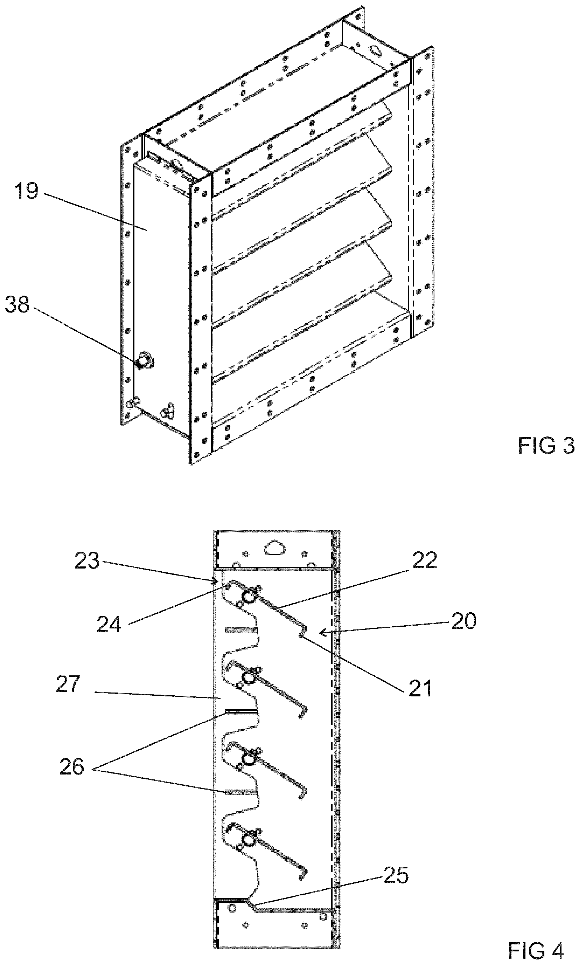

Figure 3 shows the blast damper shown in figure 1 with the protecting screen removed and with a cover covering partly the prestressing means,
Figure 4 shows the blast damper shown in figure 1 in cross-section in a state where the closing blades are in the open position,

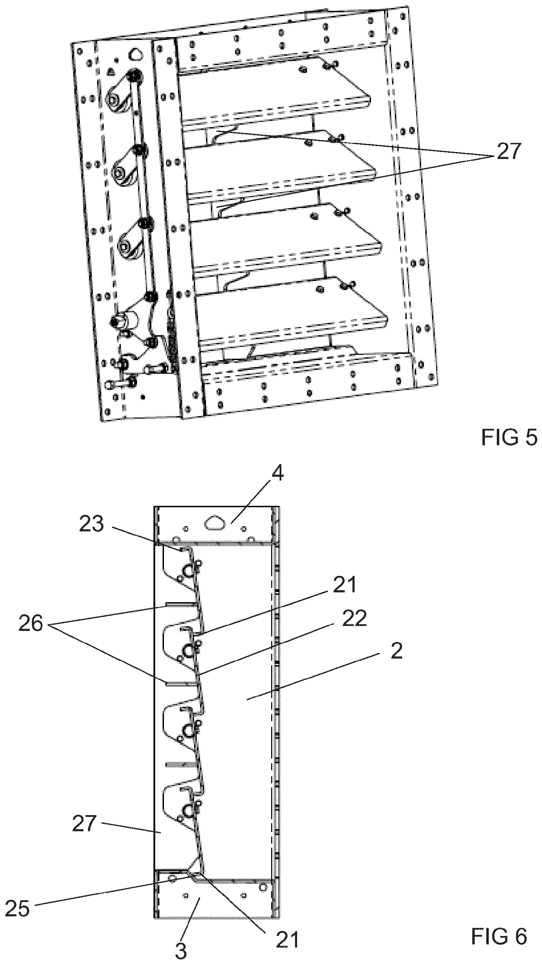

Figure 5 shows the blast damper shown in figure 1 with the protecting screen removed from another angle and in state where the closing blades are in the open position,
Figure 6 shows the blast damper shown in figure 1 in cross-section in a state where the closing blades are in the closed position
Figure 7 shows the blast damper shown in figure 1 with the protecting screen removed from another angle in a state where the closing blades are in the closed position,
Figure 8 shows the blast damper shown in figure 1 in a state where the closing blades are in the open position,
Figure 9 shows the blast damper shown in figure 1 in a state where the closing blades are in the closed position,
Figure 10 shows a blast damper having a remotely operated prestressing device according to a first embodiment, and
Figure 11 shows a blast damper having a remotely operated prestressing device according to a second embodiment.

### Detailed description of the invention

Next the blast damper and some variants and embodiments of the blast damper will be described in greater detail.

The blast damper comprises a frame 1 defining a flow channel 2 for air flow through the blast damper.

The frame 1 comprises a first profile section 3, a second profile section 4 that is parallel with the first profile section 3, a third profile section 5, and a fourth profile section 6 that is parallel with the third profile section 5.

The first profile section 3, the second profile section 4, the third profile section 5, and the fourth profile section 6 together limits the flow channel 2.

The frame 1 comprises closing blades 7 pivotably arranged in the flow channel 2.

Each closing blade 7 can be pivoted about a pivot axis (not marked with a reference numeral), that is parallel with the first profile section 3 and parallel with the second profile section 4, between a closed position and an open position so that the closing blades 7 together, when each closing blade 7 is in the closed position, prevents air flow through the flow channel 2, and so that the closing blades 7 together, when each closing blade 7 is in the open position, allows air flow through the flow channel 2. In the open position, the closing blades 7 can be arranged to be essentially parallel to the air flow through the flow channel 2 or alternatively be arranged to be at an angle to the air flow through the flow channel 2, as illustrated in the blast damper illustrated in the figures.

The blast damper can be provided with an adjustment arrangement (not illustrated in the figures) for adjusting the position the closing blades 7 have with respect to the air flow through the flow channel 2 in the open position of the closing blades 1.

The blast damper comprises a prestressing means 8 for prestressing each closing blade 7 into the open position and for triggering each closing blade 7 to pivot into the closed position.

Each closing blade 7 is pivotably supported at the third profile section 5 and at the fourth profile section 6 of the frame 1 by means of an axle means 9 that penetrates at least the third profile section 5 of the frame 1 and possible also the fourth profile section 6 of the frame 1.

Each closing blade 7 comprising a turning lever 10 that is connected to each axle means 9 at the third profile section 5 and outside the flow channel 2 so that each turning lever 10 extends transversely to the pivot axis of the closing blade 7.

A common operating lever 11 is pivotably connected to each turning lever 10 at a distance from the axle means 9 so as to effect pivoting of each closing blade 7 simultaneously between the closed position and the open position of each closing blade 7.

The prestressing means 8 comprises a spring-loaded latch lever 12 functionally acting on the turning lever 10 that is connected to the axle means 9 of the closing blade 7 that is closest to the first profile section 3 of the frame 1.

The spring-loaded latch lever 12 is pivotably connected to the third profile section 5 in an area of the third profile section 5 that is between said axle means 9 of the closing blade 7 that is closest to the first profile section 3 of the frame 1 and a corner (not marked with a reference numeral) between the first profile section 3 and the third profile section 5 in the frame 1.

The spring-loaded latch lever 12 is by means of a spring 13 pressed against said turning lever 10 that is connected to the axle means 9 of the closing blade 7 that is closest to the first profile section 3 so as to in a locking position between the spring-loaded latch lever 12 and said turning lever 10 that is connected to the axle means 9 of the closing blade 7 that is closest to the first profile section 3 releasably keep each closing blade 7 in the open position and so as to allow each closing blade 7 to pivot simultaneously into the closed position by moving out of said locking position.

Because prestressing means 8 comprises a spring-loaded latch lever 12 functionally acting on the turning lever 10 that is connected to the axle means 9 of the closing blade 7 that is closest to the first profile section 3 of the frame 1 and because the positioning of the spring-loaded latch lever 12, the frame 1 can be made narrow in the flow direction of the flow channel 2 of the blast damper.

Each of the first profile section 3, the second profile section 4, the third profile section 5, and the fourth profile section 6 comprise preferably, but not necessarily, a web section and first and second flange sections at respective sides of the web section. Each of the first profile section 3, the second profile section 4, the third profile section 5, and the fourth profile section 6 can have the cross-section form of a U-beam.

The blast damper comprises preferably, but not necessarily, a protecting screen 15. The protecting screen 15 is preferably, but not necessarily, a monolithic plate structure. An advantage by using a protecting screen 15 that is in the form of a monolithic plate structure is that the protecting screen 15 will be thin and the protecting screen 15 will not unnecessary increase the thickness of the blast damper in the flow direction of the flow channel 2 of the blast damper.

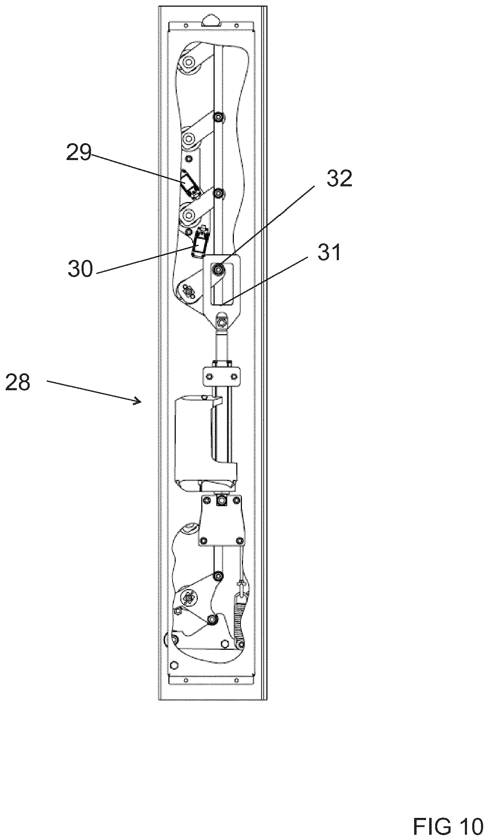

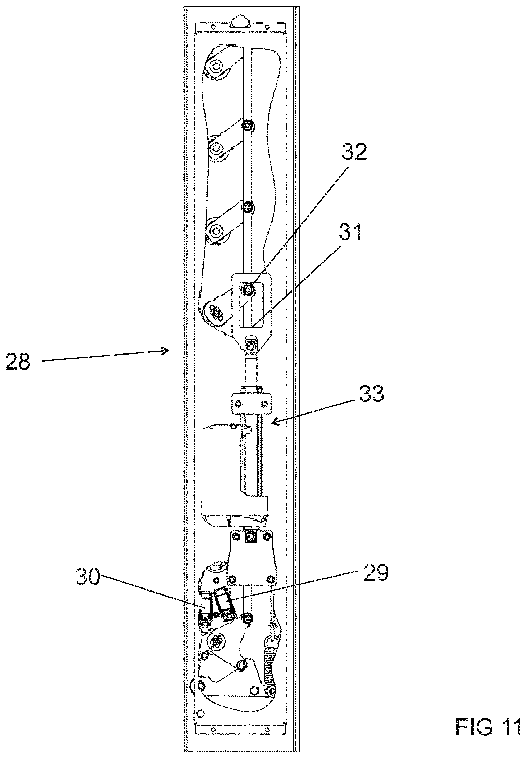

The turning lever 10 that is connected to the axle means 9 of the closing blade 7 that is closest to the first profile section 3 is preferably, but not necessarily, provided with a hook roller 14 that is by pivoting the turning lever 10 that is connected to the axle means 9 of the closing blade 7 that is closest to the first profile section 3 and the spring loaded latch lever 12 with respect to each other releasable receivable in a first slot 16 in the spring loaded latch lever 12 so as to form said locking position between the spring-loaded latch lever 12 and said turning lever 10 that is connected to the axle means 9 of the closing blade 7 that is closest to the first profile section 3. In such case, the spring loaded latch lever 12 is preferably, but not necessarily, configured to guide the hook roller 14 provided at the turning lever 10 that is connected to the axle means 9 of the closing blade 7 that is closest to the first profile section 3 into the first slot 16 when pivoting the closing blades 7 into the open position by means a prestressing arrangement 38 of the prestressing means 8. The prestressing arrangement 38 of the prestressing means 8 can for example be manually operated or alternatively comprise a remotely operated prestressing device 28 as illustrated in figures 10 and 11. In figures 10 and 11, the remotely operated prestressing device 28 is configured to act on one of the turning levers 10 so that all turning levers 10 turn simultaneously, because they are connected together by the common operating lever 11, and so that the hook roller 14 is guided by means of the spring loaded latch lever 12 into the first slot 16 in the spring loaded latch lever 12. In figures 10 and 11 the remotely operated prestressing device 28 comprises an abutment means 31 that is configured to act on a roller means 32 provided at one of the turning levers 10. The abutment means 31 is movable by means of a moving means 33 and a first limit switch 29 and a second limit switch 30 is functionally connected to the moving means 33. In practice, when the blast valve is prestressed, the moving means 33 is configured to push the roller means 32 so that all turning levers 10 and the common operating lever 11 moves and so that the spring loaded latch lever 12 guides the hook roller 14 into the first slot 16 in the spring loaded latch lever 12. When the hook roller 14 will be received in the first slot 16 in the spring loaded latch lever 12, in the embodiment illustrated in figure 10, one of the turning levers 10 will touch the first limit switch 29, which sends a signal to the moving means 33 to stop the moving of the abutments means 33 and in response said signal, the moving means 33 moves the abutment means 31 into the standby position illustrated in figure 10, where the abutment means 31 is located spaced apart from the roller means 32 so as to allow free movement of the turning lever 10 when all turning levers 10 simultaneously pivots when the closing blades 7 simultaneously pivots into the closed position. A function of the second limit switch 30 can be to trigger sending a signal to the moving means 33 to start moving of the abutment means 11 so as to simultaneously move the closing blades into the open position. The embodiment illustrated in figure 11 differs from the embodiment illustrated in figure 10 in that the first limit switch 29 and the second limit switch 30 are functionally associated with the turning lever 10 that is connected to the axle means 9 of the closing blade 7 that is closest to the first profile section 3. The turning lever 10 that is connected to the axle means 9 of the closing blade 7 that is closest to the first profile section 3 can have an additional lever extension 18, and the hook roller 14 can be provided at the additional lever extension 18. In such case, the spring loaded latch lever 12 can additionally have a second slot 17 configured to receive the hook roller 14 provided at the turning lever 10 that is connected to the axle means 9 of the closing blade 7 that is closest to the first profile section 3 in response to the closing blades 7 pivoting simultaneously into the open position. The spring loaded latch lever 12 can be configured to guide the hook roller 14 provided at said turning lever 10 that is connected to the axle means 9 of the closing blade 7 that is closest to the first profile section 3 into such second slot 17 in response to the closing blades 7 pivoting simultaneously into the open position.

Alternatively to what is illustrated in the figures, the spring loaded latch lever 12 can be provided with a hook roller 14 that is by pivoting the turning lever 10 that is connected to the axle means 9 of the closing blade 7 that is closest to the first profile section 3 and the spring loaded latch lever 12 with respect to each other releasable receivable in a first slot 16 in the turning lever 10 that is connected to the axle means 9 of the closing blade 7 that is closest to the first profile section 3 so as to form said locking position between the spring-loaded latch lever 12 and said turning lever 10 that is connected to the axle means 9 of the closing blade 7 that is closest to the first profile section 3. In such case, the turning lever 10 that is connected to the axle means 9 of the closing blade 7 that is closest to the first profile section 3 is preferably, but not necessarily, configured to guide the hook roller 14 provided at the spring loaded latch lever 12 into the first slot 16 when pivoting the closing blades 7 into the open position by means a prestressing arrangement 38 of the prestressing means 8. The prestressing arrangement 38 of the prestressing means 8 can for example be manually operated or comprise a remotely operated prestressing device 28 as illustrated in figures 10 and 11. In such case, said turning lever 10 that is connected to the axle means 9 of the closing blade 7 that is closest to the first profile section 3 can additionally have a second slot 17 configured to receive the hook roller 14 provided at the spring loaded latch lever 12 in response to the closing blades 7 pivoting simultaneously into the open position. The turning lever 10 that is connected to the axle means 9 of the closing blade 7 that is closest to the first profile section 3 can be configured to guide the hook roller 14 provided at the spring loaded latch lever 12 into such second slot 17 in response to the closing blades 7 pivoting simultaneously into the open position.

The spring 13 is preferably, but not necessarily, connected between the spring-loaded latch lever 12 and the third profile section 5.

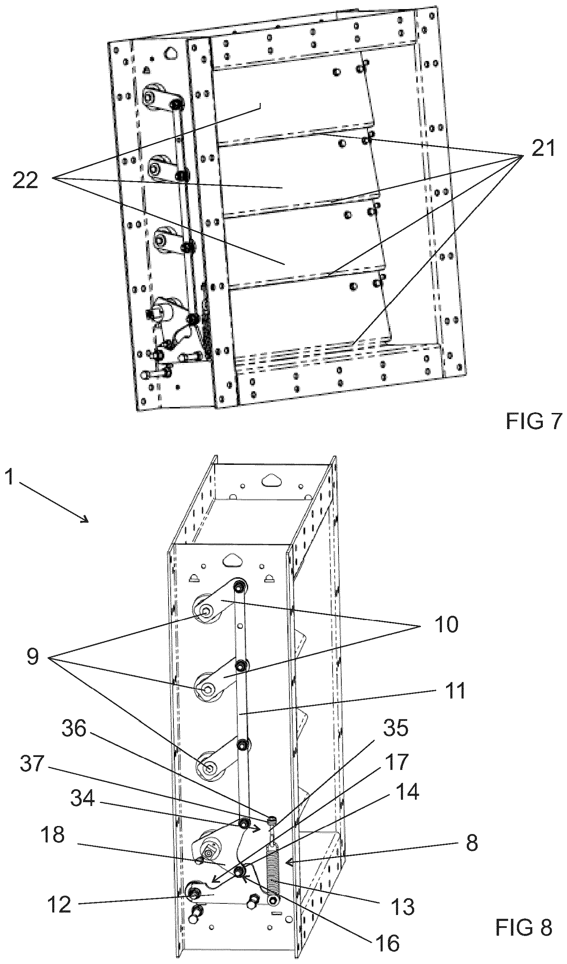

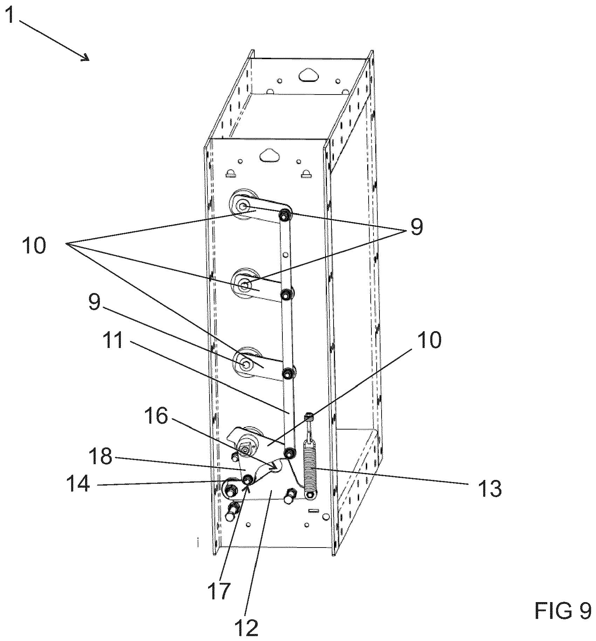

The blast damper comprises preferably, but not necessarily, a spring preload adjuster 34 that is functionally connected to the spring 13 and that is configured to adjusting a force by which the spring-loaded latch lever 12 is pressed against said turning lever 10 that is connected to the axle means 9 of the closing blade 7 that is closest to the first profile section 3. By means of such a spring preload adjuster 34 it is possible to adjust the sensitivity of the blast damper in other words to adjust how easily the spring-loaded latch lever 12 is allowed to move out of the locking position between the spring-loaded latch lever 12 and said turning lever 10 that is connected to the axle means 9 of the closing blade 7 that is closest to the first profile section 3. If the blast damper comprises a such spring preload adjuster 34, the spring is preferably, but not necessarily, a tension spring that is connected between the spring-loaded latch lever 12 and the third profile section 5 so that the spring 13 in the form of a tension spring is connected between the spring-loaded latch lever 12 and the third profile section 5 by means of the spring preload adjuster 34 as illustrated for example in figures 8 and 9. In figures 8 and 9, the spring preload adjuster 34 comprises a pin means 35 and a nut 36 that is threaded on a thread (not marked with a reference numeral) on the pin means 20 and a retainer 37 that is fastened to the third profile section 5 and that is provided with an aperture (not marked with a reference numeral) that is penetrated by the pin means 20. In figures 8 and 9 the spring preload is adjusted by rotating the pin means 35 and the nut 36 with respect to each other so that the position of the pin means 35 with respect to the third profile section 5 changes and the spring preload changes.

The spring 13 is preferably, but not necessarily, configured to be loaded when prestressing each closing blade 7 by pivoting the closing blades 7 into the open position.

The blast damper can have a separate triggering mechanism (not illustrated in the figures) functionally connected to the spring-loaded latch lever 12 so as in response to a pressure increase, such as to a pressure increase exceeding a threshold value, in the flow channel 2 to trigger the spring-loaded latch lever 12 to move out of the locking position between the spring-loaded latch lever 12 and said turning lever 10 that is connected to the axle means 9 of the closing blade 7 that is closest to the first profile section 3 so as to cause the closing blades 7 to pivot into the closed position.

The blast damper can have a separate triggering mechanism (not illustrated in the figures) functionally connected to said turning lever 10 that is connected to the axle means 9 of the closing blade 7 that is closest to the first profile section 3 so as in response to a pressure increase, such as to a pressure increase exceeding a threshold value, in the flow channel 2 to trigger the spring-loaded latch lever 12 to move out of the locking position between the spring-loaded latch lever 12 and said turning lever 10 that is connected to the axle means 9 of the closing blade 7 that is closest to the first profile section 3 so as to cause the closing blades 7 to pivot into the closed position.

The closing blades 7 can in response to a pressure increase in the flow channel 2 be configured to move the spring-loaded latch lever 12 out of the locking position between the spring-loaded latch lever 12 and said turning lever 10 that is connected to the axle means 9 of the closing blade 7 that is closest to the first profile section 3 so as to cause the closing blades 7 to pivot into the closed position

The closing blades 7 can in response to a pressure increase in the flow channel 2 be configured to move said turning lever 10 that is connected to the axle means 9 of the closing blade 7 that is closest to the first profile section 3 out of the locking position between the spring-loaded latch lever 12 and said turning lever 10 that is connected to the axle means 9 of the closing blade 7 that is closest to the first profile section 3 so as to cause the closing blades 7 to pivot into the closed position.

The closing blades 7 can be configured to pivot about the pivot axis from the open position to the closed position at least partly by means of gravity.

A cover 19 can be provided to cover at least partly the prestressing means 8.

The closing blades 7 are preferably, but not necessarily, plate-like parts, as illustrated in the figures.

The closing blades 7 can, as in the blast damper illustrated in the figures, have a leading edge 20 provided with a leading end section 21 that extends perpendicularly to a middle section 22 of the closing blades 7 and a trailing edge 23 provided with a trailing end section 24 that extends perpendicularly to the middle section 22 of the closing blades 7 so that the closing blades 7 have an U-shaped cross-section form. The closing blades 7 can be dimensioned so, as illustrated in the figures, that when each closing blade 7 is in the closed position, the leading end section 21 of the closing blade 7 settles against the middle section 22 of the adjacent closing blade 7 and so that the leading end section 21 of the closing blade 7 closest to the first profile section 3 of the frame 1 settle against the first profile section 3 of the frame 1, and so that the trailing end section 24 of the closing blade 7 closest to the second profile section 4 of the frame 1 settle against the second profile section 4 of the frame 1. In the blast damper illustrated in the figures, the first profile section 3 of the frame 1 has a step formation 25 and the leading end section 21 of the closing blade 7 closest to the first profile section 3 of the frame 1 settle against the step formation 25 of the first profile section 3 of the frame 1. Provision of such leading end section 21 and of such trailing end section 24 makes the closing blades 7 stiffer and makes the closing blades 7 to more securely close the flow channel 2 in the closed position.

In the flow channel 2 can flow controllers 26 be provided between two adjacent closing blades 7, as illustrated in the figures. In the figures, the flow controllers 26 extend between the third profile section 5 and the fourth profile section 6 essentially parallel to the flow channel 2 and to the flow direction of the blast damper and essentially perpendicularly to the third profile section 5 of the frame 1 and to the fourth profile section 6 of the frame 1 and essentially in parallel with the first profile section 3 of the frame 1 and the second profile section 4 of the frame 1. A support 27 for the flow controllers 26 can be provided essentially in the middle of the flow channel 2. The support 27 can, as illustrated in the figures, extend between the first profile section 3 and the second profile section 4 essentially parallel to the flow channel 2 and to the flow direction of the blast damper and essentially perpendicularly to the first profile section 3 of the frame 1 and to the second profile section 4 of the frame 1 and essentially in parallel with the third profile section 5 of the frame 1 and with the fourth profile section 6 of the frame 1. The closing blades 7 can be dimensioned so, as illustrated in the figures, that when each closing blade 7 is in the closed position, the middle section 22 of the closing blades 7, except for the middle section 22 of the closing blade 7 closest to the first profile section 3 of the frame 1 settle against the flow controllers 25.

The invention and its embodiments are not restricted to the above examples, but they may vary within the scope of the claims.

## Claims

1. A blast damper comprising
a frame (1) defining a flow channel (2) for air flow through the blast damper, wherein the frame (1) comprising a first profile section (3), a second profile section (4) that is parallel with the first profile section (3), a third profile section (5), and a fourth profile section (6) that is parallel with the third profile section (5) and wherein the first profile section (3), the second profile section (4), the third profile section (5), and the fourth profile section (6) together limit the flow channel (2),
closing blades (7) pivotably arranged in the flow channel (2), wherein each closing blade (7) can be pivoted around a pivot axis, that is parallel with the first profile section (3) and with the second profile section (4), between a closed position and an open position so that the closing blades (7) together, when each closing blade (7) is in the closed position, prevents air flow through the flow channel (2), and so that the closing blades (7) together, when each closing blade (7) is in the open position, allows air flow through the flow channel (2), and
a prestressing means (8) for prestressing each closing blade (7) into the open position and for triggering each closing blade (7) to pivot into the closed position,
wherein each closing blade (7) being pivotably supported at the third profile section (5) and at the fourth profile section (6) of the frame (1) by means of an axle means (9) that penetrates at least the third profile section (5),
wherein each closing blade (7) comprising a turning lever (10) that is connected to each axle means (9) at the third profile section (5) and outside the flow channel (2) so that each turning lever (10) extends transversely to the pivot axis of the closing blade (7), and
wherein the blast damper comprising a common operating lever (11) pivotably connected to each turning lever (10) at a distance from the axle means (9) so as to effect pivoting of each closing blade (7) simultaneously between the closed position and the open position of each closing blade (7),
**characterized**
**by** the prestressing means (8) comprising a spring-loaded latch lever (12) functionally acting on the turning lever (10) that is connected to the axle means (9) of the closing blade (7) that is closest to the first profile section (3),
by the spring-loaded latch lever (12) being pivotably connected to the third profile section (5) in an area of the third profile section (5) that is between said axle means (9) of the closing blade (7) that is closest to the first profile section (3) and a corner between the first profile section (3) and the third profile section (5), and
by the spring-loaded latch lever (12) being by means of a spring (13) pressed against said turning lever (10) that is connected to the axle means (9) of the closing blade (7) that is closest to the first profile section (3) so as to in a locking position between the spring-loaded latch lever (12) and said turning lever (10) that is connected to the axle means (9) of the closing blade (7) that is closest to the first profile section (3) releasably keep each closing blade (7) in the open position and so as to allow each closing blade (7) to pivot simultaneously into the closed position by moving out of said locking position.

2. The blast damper according to claim 1, **characterized**
**by** each of the first profile section (3), the second profile section (4), the third profile section (5), and the fourth profile section (6) comprise a web section and first and second flange sections at respective sides of the web section.

3. The blast damper according to claim 1 or 2, **characterized**
**by** the blast damper comprises a protecting screen (15).

4. The blast damper according to claim 3, **characterized**
**by** the protecting screen (15) being a monolithic plate structure.

5. The blast damper according to any of the claims 1 to 4, **characterized**
**by** the turning lever (10) that is connected to the axle means (9) of the closing blade (7) that is closest to the first profile section (3) is provided with a hook roller (14) that is by pivoting the turning lever (10) that is connected to the axle means (9) of the closing blade (7) that is closest to the first profile section (3) and the spring loaded latch lever (12) with respect to each other releasable receivable in a first slot (16) in the spring loaded latch lever (12) so as to form said locking position between the spring-loaded latch lever (12) and said turning lever (10) that is connected to the axle means (9) of the closing blade (7) that is closest to the first profile section (3).

6. The blast damper according to claim 5, **characterized**
**by** the spring loaded latch lever (12) being configured to guide the hook roller (14) provided at the turning lever (10) that is connected to the axle means (9) of the closing blade (7) that is closest to the first profile section (3) into the first slot (16) when pivoting the closing blades (7) into the open position by means a prestressing arrangement (38) of the prestressing means (8).

7. The blast damper according to claim 6, **characterized**
**by** the prestressing arrangement (38) comprising a remotely operated prestressing device (28) that is configured to act on the common operating lever (11) and/or at least one of the turning levers (10).

8. The blast damper according to any of the claims 5 to 7, **characterized**
**by** the turning lever (10) that is connected to the axle means (9) of the closing blade (7) that is closest to the first profile section (3) having an additional lever extension (18), and
by the hook roller (14) being provided at the additional lever extension (18).

9. The blast damper according to any of the claims 5 to 8, **characterized**
**by** the spring loaded latch lever (12) having a second slot (17) configured to receive the hook roller (14) provided at the turning lever (10) that is connected to the axle means (9) of the closing blade (7) that is closest to the first profile section (3) in response to the closing blades (7) moving simultaneously into the open position.

10. The blast damper according to claim 9, **characterized**
**by** the spring loaded latch lever (12) being configured to guide the hook roller (14) provided at said turning lever (10) that is connected to the axle means (9) of the closing blade (7) that is closest to the first profile section (3) into the second slot (17) in response to the closing blades (7) moving simultaneously into the open position.

11. The blast damper according to any of the claims 1 to 10, **characterized**
**by** the spring (13) being connected between the spring-loaded latch lever (12) and the third profile section (5).

12. The blast damper according to any of the claims 1 to 11, **characterized**
**by** the spring (13) being configured to be loaded when prestressing each closing blade (7) by moving the closing blades (7) into the open position.

13. The blast damper according to any of the claims 1 to 12, **characterized**
**by** a spring preload adjuster (34) that is functionally connected to the spring (13) and that is configured to adjusting a force by which the spring-loaded latch lever (12) is pressed against said turning lever (10) that is connected to the axle means (9) of the closing blade (7) that is closest to the first profile section (3).

14. The blast damper according to claim 13, **characterized**
**by** the spring (13) being a tension spring connected between the spring-loaded latch lever (12) and the third profile section (5), and
by the spring (13) being connected between the spring-loaded latch lever (12) and the third profile section (5) by means of the spring preload adjuster (34).

15. The blast damper according to any of the claims 1 to 14, **characterized**
**by** a separate triggering mechanism functionally connected to the spring-loaded latch lever (12) so as in response to a pressure increase in the flow channel (2) to trigger the spring-loaded latch lever (12) to move out of the locking position between the spring-loaded latch lever (12) and said turning lever (10) that is connected to the axle means (9) of the closing blade (7) that is closest to the first profile section (3) so as to cause the closing blades (7) to pivot into the closed position.

16. The blast damper according to any of the claims 1 to 15, **characterized**
**by** the closing blades (7) being in response to a pressure increase in the flow channel (2) configured to move the spring-loaded latch lever (12) out of the locking position between the spring-loaded latch lever (12) and said turning lever (10) that is connected to the axle means (9) of the closing blade (7) that is closest to the first profile section (3) so as to cause the closing blades (7) to pivot into the closed position.

## Patentansprüche

1. Explosionsschutzklappe umfassend:
einen Rahmen (1), der einen Strömungskanal (2) für eine Luftströmung durch die Explosionsschutzklappe definiert, wobei der Rahmen (1) einen ersten Profilabschnitt (3), einen zweiten Profilabschnitt (4), der parallel zum ersten Profilabschnitt (3) ist, einen dritten Profilabschnitt (5) und einen vierten Profilabschnitt (6), der parallel zum dritten Profilabschnitt (5) ist, umfasst und wobei der erste Profilabschnitt (3), der zweite Profilabschnitt (4), der dritte Profilabschnitt (5) und der vierte Profilabschnitt (6) gemeinsam den Strömungskanal (2) umgrenzen,
im Strömungskanal (2) schwenkbar angeordnete Verschlusslamellen (7), wobei jede Verschlusslamelle (7) um eine Schwenkachse, die parallel zum ersten Profilabschnitt (3) und zum zweiten Profilabschnitt (4) ist, zwischen einer geschlossenen Stellung und einer offenen Stellung geschwenkt werden kann, so dass die Verschlusslamellen (7) gemeinsam eine Luftströmung durch den Strömungskanal (2) verhindern, wenn sich jede Verschlusslamelle (7) in der geschlossenen Stellung befindet, und so dass die Verschlusslamellen (7) gemeinsam eine Luftströmung durch den Strömungskanal (2) gestatten, wenn sich jede Verschlusslamelle (7) in der offenen Stellung befindet, und
ein Vorspannmittel (8), um jede Verschlusslamelle (7) in die offene Stellung vorzuspannen und ein Schwenken der Verschlusslamelle (7) zur geschlossenen Stellung auszulösen,
wobei jede Verschlusslamelle (7) über ein Achsenmittel (9), das mindestens den dritten Profilabschnitt (5) durchdringt, am dritten Profilabschnitt (5) und am vierten Profilabschnitt (6) des Rahmens (1) schwenkbar gelagert ist,
wobei jede Verschlusslamelle (7) einen Schwenkhebel (10) umfasst, der am dritten Profilabschnitt (5) und außerhalb des Strömungskanals (2) mit jedem Achsenmittel (9) verbunden ist, so dass sich jeder Schwenkhebel (10) quer zur Schwenkachse der Verschlusslamelle (7) erstreckt, und
wobei die Explosionsschutzklappe einen mit jedem Schwenkhebel (10) schwenkbar verbundenen gemeinsamen Betätigungshebel (11) mit Abstand zum Achsenmittel (9) umfasst, um ein gleichzeitiges Schwenken jeder Verschlusslamelle (7) zwischen der geschlossenen Stellung und der offenen Stellung jeder Verschlusslamelle (7) zu bewirken,
**gekennzeichnet dadurch,**
**dass** das Vorspannmittel (8) einen federbelasteten Klinkenhebel (12) umfasst, der funktionswirksam auf den Schwenkhebel (10), der mit dem Achsenmittel (9) der dem ersten Profilabschnitt (3) nächstgelegenen Verschlusslamelle (7) verbunden ist, einwirkt,
**dass** der federbelastete Klinkenhebel (12) in einem Bereich des dritten Profilabschnitts (5), der sich zwischen dem Achsenmittel (9) der dem ersten Profilabschnitt (3) nächstgelegenen Verschlusslamelle (7) und einem Winkel zwischen dem ersten Profilabschnitt (3) und dem dritten Profilabschnitt (5) befindet, schwenkbar mit dem dritten Profilabschnitt (5) verbunden ist, und
**dass** der federbelastete Klinkenhebel (12) über eine Feder (13) an den Schwenkhebel (10), der mit dem Achsenmittel (9) der dem ersten Profilabschnitt (3) nächstgelegenen Verschlusslamelle (7) verbunden ist, angepresst wird, um in einer Verriegelungsposition zwischen dem federbelasteten Klinkenhebel (12) und dem Schwenkhebel (10), der mit dem Achsenmittel (9) der dem ersten Profilabschnitt (3) nächstgelegenen Verschlusslamelle (7) verbunden ist, jede Verschlusslamelle (7) lösbar in der offenen Stellung zu halten und zu ermöglichen, dass jede Verschlusslamelle (7) durch Herausbewegen aus der Verriegelungsstellung gleichzeitig in die geschlossene Stellung schwenkt.

2. Explosionsschutzklappe nach Anspruch 1, **gekennzeichnet dadurch,**
**dass** der erste Profilabschnitt (3), der zweite Profilabschnitt (4), der dritte Profilabschnitt (5) und der vierte Profilabschnitt (6) jeweils einen Stegabschnitt und einen ersten und zweiten Flanschabschnitt an entsprechenden Seiten des Stegabschnitts umfassen.

3. Explosionsschutzklappe nach Anspruch 1 oder 2, **gekennzeichnet dadurch,**
**dass** die Explosionsschutzklappe eine Abschirmung (15) umfasst,

4. Explosionsschutzklappe nach Anspruch 3, **gekennzeichnet dadurch,**
**dass** die Abschirmung (15) eine monolithische Plattenstruktur ist.

5. Explosionsschutzklappe nach einem der Ansprüche 1 bis 4, **gekennzeichnet dadurch,**
**dass** der Schwenkhebel (10), der mit dem Achsenmittel (9) der dem ersten Profilabschnitt (3) nächstgelegenen Verschlusslamelle (7) verbunden ist, mit einer Hakenwalze (14) versehen ist, die dadurch, dass der Schwenkhebel (10), der mit dem Achsenmittel (9) der dem ersten Profilabschnitt (3) nächstgelegenen Verschlusslamelle (7) verbunden ist, und der federbelastete Klinkenhebel (12) in Bezug zueinander verschwenkt werden, lösbar in einer ersten Ausklinkung (16) im federbelasteten Klinkenhebel (12) aufnehmbar ist, um die Verriegelungsposition zwischen dem federbelasteten Klinkenhebel (12) und dem Schwenkhebel (10), der mit dem Achsenmittel (9) der dem ersten Profilabschnitt (3) nächstgelegenen Verschlusslamelle (7) verbunden ist, auszubilden.

6. Explosionsschutzklappe nach Anspruch 5, **gekennzeichnet dadurch,**
**dass** der federbelastete Klinkenhebel (12) dazu ausgelegt ist, die Hakenwalze (14), die am Schwenkhebel (10), der mit dem Achsenmittel (9) der dem ersten Profilabschnitt (3) nächstgelegenen Verschlusslamelle (7) verbunden ist, vorgesehen ist, in die erste Ausklinkung (16) zu führen, wenn die Verschlusslamellen (7) über eine Vorspannanordnung (38) des Vorspannmittels (8) in die offene Stellung geschwenkt werden.

7. Explosionsschutzklappe nach Anspruch 6, **gekennzeichnet dadurch,**
**dass** die Vorspannanordnung (38) eine fernbediente Vorspannvorrichtung (28) umfasst, die dazu ausgelegt ist, auf den gemeinsamen Betätigungshebel (11) und/oder mindestens einen der Schwenkhebel (10) einzuwirken.

8. Explosionsschutzklappe nach einem der Ansprüche 5 bis 7, **gekennzeichnet dadurch,**
**dass** der Schwenkhebel (10), der mit dem Achsenmittel (9) der dem ersten Profilabschnitt (3) nächstgelegenen Verschlusslamelle (7) verbunden ist, eine zusätzliche Hebelverlängerung (18) aufweist, und
**dass** die Hakenwalze (14) an der zusätzlichen Hebelverlängerung (18) vorgesehen ist.

9. Explosionsschutzklappe nach einem der Ansprüche 5 bis 8, **gekennzeichnet dadurch,**
**dass** der federbelastete Klinkenhebel (12) eine zweite Ausklinkung (17) aufweist, die ausgelegt ist zum Aufnahmen der Hakenwalze (14), die an dem Schwenkhebel (10), der mit dem Achsenmittel (9) der dem ersten Profilabschnitt (3) nächstgelegenen Verschlusslamelle (7) verbunden ist, vorgesehen ist, in Reaktion darauf, dass die Verschlusslamellen (7) sich gleichzeitig in die offene Stellung bewegen.

10. Explosionsschutzklappe nach Anspruch 9, **gekennzeichnet dadurch,**
**dass** der federbelastete Klinkenhebel (12) ausgelegt ist zum Führen der Hakenwalze (14), die an dem Schwenkhebel (10), der mit dem Achsenmittel (9) der dem ersten Profilabschnitt (3) nächstgelegenen Verschlusslamelle (7) verbunden ist, vorgesehen ist, in die zweite Ausklinkung (17) in Reaktion darauf, dass die Verschlusslamellen (7) sich gleichzeitig in die offene Stellung bewegen.

11. Explosionsschutzklappe nach einem der Ansprüche 1 bis 10, **gekennzeichnet dadurch,**
**dass** die Feder (13) zwischen dem federbelasteten Klinkenhebel (12) und dem dritten Profilabschnitt (5) angeschlossen ist.

12. Explosionsschutzklappe nach einem der Ansprüche 1 bis 11, **gekennzeichnet dadurch,**
**dass** die Feder (13) so ausgelegt ist, dass sie beim Vorspannen jeder Verschlusslamelle (7) durch das Hineinbewegen der Verschlusslamellen (7) in die offene Stellung belastet wird.

13. Explosionsschutzklappe nach einem der Ansprüche 1 bis 12, **gekennzeichnet durch**
einen Federvorlasteinsteller (34), der funktionswirksam mit der Feder (13) verbunden ist und der dazu ausgelegt ist, eine Kraft einzustellen, über die der federbelastete Klinkenhebel (12) an den Schwenkhebel (10), der mit dem Achsenmittel (9) der dem ersten Profilabschnitt (3) nächstgelegenen Verschlusslamelle (7) verbunden ist, angepresst wird.

14. Explosionsschutzklappe nach Anspruch 13, **gekennzeichnet dadurch,**
**dass** die Feder (13) eine zwischen dem federbelasteten Klinkenhebel (12) und dem dritten Profilabschnitt (5) angeschlossene Spannfeder ist, und
**dass** die Feder (13) über den Federvorlasteinsteller (34) zwischen dem federbelasteten Klinkenhebel (12) und dem dritten Profilabschnitt (5) angeschlossen ist.

15. Explosionsschutzklappe nach einem der Ansprüche 1 bis 14, **gekennzeichnet dadurch,**
**dass** ein separater Auslösemechanismus mit dem federbelasteten Klinkenhebel (12) funktionswirksam so verbunden ist, dass er in Reaktion auf eine Druckerhöhung im Strömungskanal (2) den federbelasteten Klinkenhebel (12) auslöst, so dass sich dieser aus der Verriegelungsposition zwischen dem federbelasteten Klinkenhebel (12) und dem Schwenkhebel (10), der mit dem Achsenmittel (9) der dem ersten Profilabschnitt (3) nächstgelegenen Verschlusslamelle (7) verbunden ist, herausbewegt, um zu bewirken, dass die Verschlusslamellen (7) in die geschlossene Stellung schwenken.

16. Explosionsschutzklappe nach einem der Ansprüche 1 bis 15, **gekennzeichnet dadurch,**
**dass** die Verschlusslamellen (7) dazu ausgelegt sind, in Reaktion auf eine Druckerhöhung im Strömungskanal (2) den federbelasteten Klinkenhebel (12) aus der Verriegelungsposition zwischen dem federbelasteten Klinkenhebel (12) und dem Schwenkhebel (10), der mit dem Achsenmittel (9) der dem ersten Profilabschnitt (3) nächstgelegenen Verschlusslamelle (7) verbunden ist, herauszubewegen, um zu bewirken, dass die Verschlusslamellen (7) in die geschlossene Stellung schwenken.

## Revendications

1. Clapet anti-souffle comprenant
un cadre (1) définissant un canal d'écoulement (2) pour un flux d'air à travers le clapet anti-souffle, ledit cadre (1) comprenant une première section de profil (3), une deuxième section de profil (4) qui est parallèle à la première section de profil (3), une troisième section de profil (5), et une quatrième section de profil (6) qui est parallèle à la troisième section de profil (5), et lesdites première section de profil (3), deuxième section de profil (4), troisième section de profil (5) et quatrième section de profil (6) délimitant ensemble le canal d'écoulement (2),
des lames de fermeture (7) disposées de manière pivotante dans le canal d'écoulement, chaque lame de fermeture (7) pouvant être pivotée autour d'un axe de pivotement, qui est parallèle à la première section de profil (3) et à la deuxième section de profil (4), entre une position fermée et une position ouverte de telle façon que les lames de fermeture (7) empêchent ensemble un flux d'air à travers le canal d'écoulement (2) quand chaque lame de fermeture (7) est en position fermée et de telle façon que les lames de fermeture (7) autorisent ensemble un flux d'air à travers le canal d'écoulement (2) quand chaque lame de fermeture (7) est en position ouverte, et
un moyen de précontrainte (8) pour précontraindre chaque lame de fermeture (7) vers la position ouverte et déclencher un pivotement de chaque lame de fermeture (7) vers la position fermée,
chaque lame de fermeture (7) étant logée de manière pivotante dans la troisième section de profil (5) et dans la quatrième section de profil (6) du cadre (1) par un moyen d'axe (9) qui pénètre au moins la troisième section de profil (5),
chaque lame de fermeture (7) comprenant un levier pivotant (10) relié à chaque moyen d'axe (9) dans la troisième section de profil (5) et en dehors du canal d'écoulement (2) de telle façon que chaque levier pivotant (10) s'étende transversalement à l'axe de pivotement de la lame de fermeture (7), et
ledit clapet anti-souffle comprenant un levier de manoeuvre commun (11) relié de manière pivotante à chaque levier pivotant (10) à distance du moyen d'axe (9) pour effectuer un pivotement simultané de chaque lame de fermeture (7) entre la position fermée et la position ouverte de chaque lame de fermeture (7),
**caractérisé en ce**
**que** le moyen de précontrainte (8) comprend un levier de verrouillage à rappel (12) agissant de manière fonctionnelle sur le levier pivotant (10) qui est relié au moyen d'axe (9) de la lame de fermeture (7) la plus proche de la première section de profil (3),
**que** le levier de verrouillage à rappel (12) est relié de manière pivotante à la troisième section de profil (5) dans une région de la troisième section de profil (5) qui est située entre ledit moyen d'axe (9) de la lame de fermeture (7) la plus proche de la première section de profil (3) et un coin d'angle entre la première section de profil (3) et la troisième section de profil (5), et
**que** le levier de verrouillage à rappel (12) est, moyennant un ressort (13), pressé contre ledit levier pivotant (10) qui est relié au moyen d'axe (9) de la lame de fermeture (7) la plus proche de la première section de profil (3) de manière à maintenir, dans une position de verrouillage entre le levier de verrouillage à rappel (12) et ledit levier pivotant (10) qui est relié au moyen d'axe (9) de la lame de fermeture (7) la plus proche de la première section de profil (3), chaque lame de fermeture (7) de manière amovible dans la position ouverte et, par un mouvement de sortie de la position de verrouillage, autoriser chaque lame de fermeture (7) à pivoter simultanément vers la position fermée.

2. Clapet anti-souffle selon la revendication 1, **caractérisé en ce**
**que** chacune des première section de profil (3), deuxième section de profil (4), troisième section de profil (5) et quatrième section de profil (6) comprend une section d'âme et une première et une deuxième sections de semelle sur les côtés respectifs de la section d'âme.

3. Clapet anti-souffle selon la revendication 1 ou 2, **caractérisé en ce**
**que** le clapet anti-souffle comprend un écran protecteur (15).

4. Clapet anti-souffle selon la revendication 3, **caractérisé en ce**
**que** l'écran protecteur (15) est une structure de plaque monolithique.

5. Clapet anti-souffle selon l'une des revendications 1 à 4, **caractérisé en ce**
**que** le levier pivotant (10) qui est relié au moyen d'axe (9) de la lame de fermeture (7) la plus proche de la première section de profil (3) est pourvu d'un rouleau de crochet (14) qui, par le pivotement du levier pivotant (10) qui est relié au moyen d'axe (9) de la lame de fermeture (7) la plus proche de la première section de profil (3) et du levier de verrouillage à rappel (12) l'un par rapport à l'autre, peut être accueilli de manière amovible dans un premier dégagement (16) dans le levier de verrouillage à rappel (12) pour former la position de verrouillage entre le levier de verrouillage à rappel (12) et le levier pivotant (10) qui est relié au moyen d'axe (9) de la lame de fermeture (7) la plus proche de la première section de profil (3).

6. Clapet anti-souffle selon la revendication 5, **caractérisé en ce**
**que** le levier de verrouillage à rappel (12) est configuré pour guider le rouleau de crochet (14) prévu au levier pivotant (10) qui est relié au moyen d'axe (9) de la lame de fermeture (7) la plus proche de la première section de profil (3) dans le premier dégagement (16) quand les lames de fermeture (7) sont pivotées dans la position ouverte moyennant un agencement de précontrainte (38) du moyen de précontrainte (8).

7. Clapet anti-souffle selon la revendication 6, **caractérisé en ce**
**que** l'agencement de précontrainte (38) comprend un dispositif de précontrainte télécommandé (28) qui est configuré pour agir sur le levier de manoeuvre commun (11) et/ou au moins l'un des leviers pivotants (10).

8. Clapet anti-souffle selon l'une des revendications 5 à 7, **caractérisé en ce**
**que** le levier pivotant (10) qui est relié au moyen d'axe (9) de la lame de fermeture (7) la plus proche de la première section de profil (3) comporte une extension de levier supplémentaire (18), et
**que** le rouleau de crochet (14) est prévu sur l'extension de levier supplémentaire (18).

9. Clapet anti-souffle selon l'une des revendications 5 à 8, **caractérisé en ce**
**que** le levier de verrouillage à rappel (12) comporte un deuxième dégagement (17) configuré pour accueillir le rouleau de crochet (14) prévu au levier pivotant (10) qui est relié au moyen d'axe (9) de la lame de fermeture (7) la plus proche de la première section de profil (3) en réponse au mouvement simultané des lames de fermeture (7) vers la position ouverte.

10. Clapet anti-souffle selon la revendication 9, **caractérisé en ce**
**que** le levier de verrouillage à rappel (12) est configuré pour guider le rouleau de crochet (14) prévu au levier pivotant (10) qui est relié au moyen d'axe (9) de la lame de fermeture (7) la plus proche de la première section de profil (3) dans le deuxième dégagement (17) en réponse au mouvement simultané des lames de fermeture (7) vers la position ouverte.

11. Clapet anti-souffle selon l'une des revendications 1 à 10, **caractérisé en ce**
**que** le ressort (13) est relié entre le levier de verrouillage à rappel (12) et la troisième section de profil (5).

12. Clapet anti-souffle selon l'une des revendications 1 à 11, **caractérisé en ce**
**que** le ressort (13) est configuré pour être tendu lors de la précontrainte de chaque lame de fermeture (7) par le mouvement des lames de fermeture (7) vers la position ouverte.

13. Clapet anti-souffle selon l'une des revendications 1 à 12, **caractérisé**
**par** un régleur de précontrainte de ressort (34) qui est relié de manière fonctionnelle au ressort (13) et qui est configuré pour mettre au point une force par laquelle le levier de verrouillage à rappel (12) est pressé contre ledit levier pivotant (10) qui est relié au moyen d'axe (9) de la lame de fermeture (7) la plus proche de la première section de profil (3).

14. Clapet anti-souffle selon la revendication 13, **caractérisé en ce**
**que** le ressort (13) est un ressort de rappel relié entre le levier de verrouillage à rappel (12) et la troisième section de profil (5), et
**que** le ressort (13) est relié entre le levier de verrouillage à rappel (12) et la troisième section de profil (5) par le régleur de précontrainte de ressort (34).

15. Clapet anti-souffle selon l'une des revendications 1 à 14, **caractérisé en ce**
**qu'**un mécanisme de déclenchement séparé est relié de manière fonctionnelle au levier de verrouillage à rappel (12) de manière à déclencher, en réponse à une augmentation de pression dans le canal d'écoulement (2), un mouvement du levier de verrouillage à rappel (12) sortant de la position de verrouillage entre le levier de verrouillage à rappel (12) et le levier pivotant (10) qui est relié au moyen d'axe (9) de la lame de fermeture (7) la plus proche de la première section de profil (3) afin d'amener les lames de fermeture (7) à pivoter dans la position fermée.

16. Clapet anti-souffle selon l'une des revendications 1 à 15, **caractérisé en ce**
**que** les lames de fermeture (7) sont configurées pour faire sortir le levier de verrouillage à rappel (12) de la position de verrouillage entre le levier de verrouillage à rappel (12) et le levier pivotant (10) qui est relié au moyen d'axe (9) de la lame de fermeture (7) la plus proche de la première section de profil (3) en réponse à une augmentation de pression dans le canal d'écoulement (2) afin d'amener les lames de fermeture (7) à pivoter dans la position fermée.
